# EUROPEAN PATENT APPLICATION

(11) **EP 4 174 244 A1**
(43) Date of publication of application: **03.05.2023**
(21) Application number: 21205093.4
(22) Date of filing: 27.10.2021
(51) Int. Cl.: E04D 11/00, A01G 9/02, A01G 9/033, C12N 1/14, A01G 18/20

(54) **ELEMENT FOR A GREEN ROOF OR A GREEN WALL**

(71) Applicant: Borra, Hans Antonius, 3707 TB Zeist (NL)
(72) Inventor: Borra, Hans Antonius, 3707 TB Zeist (NL)
(74) Representative: De Vries & Metman

(57) **Abstract**

The invention relates to a method of making an element (5) for a green roof, such as a pitched roof (15) or a flat roof, or a green wall comprising the steps of
providing an open reinforcement structure (3) comprising voids,
providing a flowable matrix material (4) containing a substrate for water retention,
introducing or preparing the matrix material (4) containing the substrate in the voids of the reinforcement (3) structure,
allowing the matrix material (4) to harden to form a solid matrix (4) embedding the substrate and the reinforcement structure (3).

## Description

The invention relates to a method of making an element for a green roof, such as a pitched roof, i.e. a roof having an inclination angle of more than 15°, or a flat roof, having an inclination angle of 15° or less, or a green wall, extending at least substantially vertically. Such a roof typically comprises a roof surface, e.g. a decking, a water-resistant, ideally waterproof, and preferably rootresistant layer covering the roof surface, typically to prevent water from penetrating the roof surface, a drainage layer, a substrate for the retention of water, and a vegetation layer. The invention also relates to an element for a green roof or a green wall.

Green roofs, also known as vegetation roofs, and green walls are booming worldwide. Due to ongoing urbanization, environmental issues, the urban heat island effect, etc., the demand for more green in, in particular, cities is increasing. Roofs are a suitable place to meet the demand for more vegetation. Subsidy schemes are available in more and more cities to encourage homeowners to invest in a green roof. These subsidies are often based on the water retention capacity of the roof (typically expressed in liters of water retainable per square meter). Building a vegetation roof is a labor-intensive process because such roofs are composed of several layers.

WO 2009/156742 relates to "A modular green roof building element .. [that] can be used to modify an existing roof to turn it into a green roof. A green roof building element has walls .. which contain the growing medium in which vegetation of the green roof can grow and a floor which is water permeable but impermeable to the growing material so that water can drain through the soil (or other growing medium) out on to the roof and drain away in the usual fashion. To make a green roof, a number of modular green roof building elements .. are positioned next to each other on the roof, spaced away from the roof, for example by legs."

Optigrün Anti-Slip System S is used on roofs with a 15-45° roof pitch. It comprises a suitable construction according to static requirements, a waterproofing and rootresistant membrane covering the construction, a structured storage Fleece SSV 800, an anti-slip safety net N25/35, anti-slip sills, extensive substrate having a thickness of at least 60 mm, and a vegetation mat.

US 2015/334926 relates to a green or living wall including a waterproof layer to protect the surface from water and other materials from the living wall, and several plant support components extending horizontally in parallel to each other across the wall. The components include a tubular wall filled with a growth media formed of hydromix and/or potting substrate, one or more layers of a water retaining material and an out support layer.

It is an object of the present invention to provide an improved method of making an element for a green roof, yielding an element that facilitates relatively versatile and/or efficient installation of a green roof or wall.

To this end, the method according to the present invention comprises the steps of providing an open reinforcement structure comprising voids, providing a flowable matrix material, e.g. a liquid, a slurry, and/or a powder, containing a substrate for water retention, introducing or preparing the matrix material containing the substrate in the voids of the reinforcement structure, and allowing the matrix material to harden, e.g. to set, solidy, or grow, to form a solid matrix embedding the substrate and the reinforcement structure.

Suitable substrates for the retention of water include perlite, lava, bims, crushed ceramic tiles, compost, or a composition containing one or more of these components. In general, it is preferred that the substrate is granular and/or porous and/or contains no or a limited amount of organic material, e.g. less than 35 wt%, preferably less than 25 wt%, e.g. less than 10 wt%, preferably optimum for sufficient and fast growth of the vegetation, because these properties improve retention of water and nutrients for the vegetation layer and improve the ratio of the weight of the dry substrate to the weight of the wetted substrate.

In an embodiment, the amount of substrate for the retention of water in the mixture is in range from 20 to 80 volume percent (of the total mixture, excluding the reinforcement structure), preferably 30 to 70 volume percent.

In an embodiment, the method comprises providing a fungus and a nutrient, typically in the form of a nutrient substrate, introducing or preparing a mixture of the fungus, the nutrient and the substrate for water retention below the reinforcement structure and/or in the voids of the reinforcement structure, allowing the fungus to grow, e.g. for a period in a range from 50 to 120 hours, preferably in a range from 70 to 110 hours, to form a network of hyphae through the mixture and the reinforcement structure to form a mycelium composite embedding the reinforcement structure and the substrate for water retention, and drying the composite.

The method integrates in a straightforward manner various components required and/or desirable in a green roof or wall and yields an element for installing a green roof or wall that is potentially solid and/or lightweight, simplifying logistics and handling, and/or which can be shaped with increased (design) freedom, during fabrication in a suitable mold and/or by cutting to a desired shape during installation of a green roof or wall.

Suitable nutrient substrates for creating mycelium composite include wood materials, e.g. particles, such as saw dust and wood shavings, and materials from grain, maize, rice, or hemp.

Nutrients that can be added, e.g. up to a total amount of 40 wt% of the substrate in total, to the nutrient substrate include vegetable materials such as cucumber, peppers, grass, reed, beer broth, potato steam peel, root pulp and used growing substrates from greenhouses.

The fungus digests the nutrient components in the substrate over a period of time sufficient to grow hyphae and to allow the hyphae to form a network of interconnected mycelia cells through and/or around the discrete particles to form a mycelium composite and bonding the composite to the reinforcement structure.

In an embodiment, the mycelium composite has a thermal conductivity, lambda (λ), of 0,037 W/mK or less, preferably 0,032 W/mK or less and/or a specific weight in a range from 100 to 200 kg/m3, preferably in a range from 120 to 180 kg/m3, and/or a porosity in a range from 10% to 50%, preferably 12% to 40%, preferably 15% to 30%.

The at least one fungus is preferably a white rot fungus and preferably one that grows relatively quickly and/or is able to accept materials that are strange to its habitat.

In an embodiment, the fungus or at least one of the fungi is selected from the group consisting of Pleurotus ostreatus, Pleurotus eryngii, Stropharia Rugosoannulata, Trametes versicolor, Ganoderma Lucidum, Phanerochaete chrysosporium, Bjerkandera adusta, Lentinula edodes, Pycnoporus cinnabarinus, Pycnoporus sanguineus, Grifola frondosa, Schizophyllum commune, Neolentinus lepideus, and Heterobasidiom annosum.

In an embodiment, during at least part of the growing of the hyphae, the mold is covered, in particular to prevent moisture from escaping, and/or the temperature of the mixture is maintained in a range from 15 to 24 degrees Celsius.

In a further aspect, the growth of the fungus is stopped, in particular inactivated or killed, by means of heating, reduced pressure (vacuum), freezing, radiation and/or drying.

In another embodiment, the method comprises providing a mold, introducing the open reinforcement structure comprising voids into the mold, introducing or preparing the flowable matrix material, such as a mixture of a fungus and a nutrient, containing the substrate for water retention in the mold and in the voids of the reinforcement structure, and allowing the matrix to harden, and, where applicable, preferably drying the formed mycelium composite, while the matrix remains in the mold.

Other examples of suitable matrix materials include clay, biological foam or gel (hydrogel or organic gel) and pressed or non-pressed foam or coconut mat.

The invention further relates to an element, in particular a plate, for assembling a green roof or wall, comprising an open reinforcement structure comprising voids, which structure is embedded in a matrix material containing a substrate for water retention. In an embodiment, the element is made with the method according invention described above.

In an embodiment, the substrate in the matrix material provides a water retention of at least 10 liters per square meter of the element, preferably at least 20 liters per square meter. Thus, the substrate serves as a substantial buffer for water and helps reduce peak loads on sewage, for instance during heavy rain. Water retention can be adjusted to a specific design by selecting the height of the elements and the amount of substrate in the elements.

In another embodiment, the open reinforcement structure comprises a web of entangled fibers and/or filaments. In a refinement, the fibers and/or filaments are bonded together, e.g. mechanically, thermally and/or chemically, and/or are made from a synthetic material, in particular a thermoplastic polymer, such as a polyamid, a polyester, a polyolefin, and/or a biodegradable plastic.

In another embodiment, the open reinforcement structure is at least 70% open, i.e. the reinforcement structure comprises less than 30% solid material and 70% or more void, in practice typically air or water, or, in the element, filled with matrix material. It is preferred that the open reinforcement structure is at least 80% open, preferably at least 90% open.

In another embodiment, the open reinforcement structure has a height of at least 1 centimeter, preferably a height in a range from 1,5 to 10 cm, preferably in a range from 2 to 7 cm.

The shape of the elements, in particular the shape of the circumference of the elements, can be chosen with relatively great freedom, e.g. adapted to the shape of an edge of the roof or features, such as windows, in the roof. In an embodiment, the elements interlock, preferably by means of features that overlap or fit together preferably by sliding an element perpendicular to the surface of the roof and relative to an adjoining element. In another embodiment, the elements are rectangular, e.g. 80 x 120 cm to precisely fit on a Europallet or e.g. 1 x 6 m.

In an embodiment, a layer comprising vegetation and/or wherein seeds for vegetation are attached to or embedded in at least the topside of the element. The topside of the element is the side that, once the element is installed on a roof, faces away from the roof structure beneath.

In an embodiment, the vegetation layer is fixed to the element by plugs that have been inserted through the vegetation layer and into the element. In another embodiment, seeds are adhered to the top surface of the element, in particular to the hardened matrix material and/or are embedded in the top layer of the matrix material, e.g. in the top centimeter of matrix material.

In an embodiment, the vegetation and/or seeds comprise a fungus, e.g. as a (partial) coating, preferably a fungus, such as a Mycorrhizal fungus, that provides a symbiotic relationship with the vegetation and/or seeds. In an example, the fungus delivers nutrients and water to the vegetation and/or seeds.

In an embodiment, the hardened matrix material is penetrable for the roots of vegetation attached to or embedded in the element.

In an embodiment, a textile backing layer, e.g. a nonwoven, such as a needle felt, e.g. made from synthetic filaments and/or fibers, is attached to the bottomside of the open reinforcement structure and/or the matrix. The bottomside of the element is the side that, once the element is installed on a roof, faces towards the roof structure. In an embodiment, the backing layer functions as a draining layer.

In an embodiment, the backing layer has a thickness of at least 1 millimeter, preferably at least 3 millimeters. In a further refinement, the backing layer functions as a retention layer, e.g. providing a water retention of at least 1 liter per square meter, preferably at least 2 liters per square meter, preferably at least 5 liters per square meter. In an embodiment, the backing layer functions and/or comprises an anti-root barrier, preferably as its bottom surface.

In an example, the backing layer is made from the same material as the open reinforcement structure or a layer of the same material as the open reinforcement structure is attached to the bottomside of the backing layer.

Suitable nonwovens for the backing layer include needled nonwoven (geo)textiles, also known as needle felt, made e.g. from polyolefin, e.g. polypropylene, fibers or filaments. In an example, the backing layer is made from or provided with Enkamat^{®}.

The invention further relates to a green roof, such as a pitched roof (> 15° inclination) or a flat roof (=< 15°), or a green wall, comprising a roof or wall surface, a water resistant layer covering the roof or wall surface, and a plurality of elements according to the present invention covering at least part of the water resistant layer.

In an embodiment, the elements are attached to the water-resistant layer, preferably by means of hook-and-pile fasteners. It is preferred that the piles are attached to or part of the bottom side of the elements, e.g. the backing layer, e.g. made from a nonwoven textile, provides the piles of the hook-and-pile fasteners and the water-resistant layer comprises the hooks of the hook-and-pile fasteners.

In an embodiment, the hooks are attached, e.g. adhered, to or integrated in the water-resistant layer. The hooks can be provided in the form of strips or patches, e.g. having the hooks on one side and an adhesive layer on the other side to adhere the strips or patches to the water-resistant layer.

In an embodiment, after a certain period, e.g. one or two seasons, the matrix material has at least partially disintegrated and/or the roots of the vegetation layer have grown through the open reinforcement structure, thus anchoring the vegetation layer.

In another embodiment, the vegetation comprises plug plants, e.g. extensive plants, such as sedum, or semiextensive plants, such as grasses, herbs (chives, thyme, lavender, etc.), Saxifraga, moss (Bryophyta), and perennials, extending through the topside of the elements and into the matrix containing the substrate for water retention. By using seeds or plug plants instead of a fully grown layer of vegetation, such as a sedum mat, the vegetation layer matures/grows on the roof, which in turn enables more efficient use of (existing) nurseries for vegetation. In an example, a plug plant is provided for every 100 to 500 square centimeter of top surface of the elements. When using seeds, the green roof itself becomes a nursery for vegetation.

The green roof element according to the present invention provides good resistance to shear forces, during installation, during the season following installation and even if the matrix has disintegrated. I.e., ideally, its role has been taken over by the roots of the vegetation that, by that time, are entangled with the reinforcement structure. Further, the green roof element can be installed with the water retention substrate and/or the vegetation and/or seed already in and/or on it, which saves labor, reduces or avoids the risk of spilling at the construction site, and which facilitates precisely defining the amount and/or the composition of the substrate.

For the sake of completeness, reference is made to the following publications.

DE 20 2012 104 884 U1 relates to a vertical greening system, comprising a support profile which can be fastened to a load-bearing wall by means of anchoring elements.

WO 2008/073489 relates to a composite material that is comprised of a substrate of discrete particles and a network of interconnected mycelia cells bonding the discrete particles together. The composite material is made by inoculating a substrate of discrete particles and a nutrient material with a preselected fungus. The fungus digests the nutrient material over a period of time sufficient to grow hyphae and to allow the hyphae to form a network of interconnected mycelia cells through and around the discrete particles thereby bonding the discrete particles together to form a self-supporting composite material.

WO 2018/014004 relates to forming fungal materials and fungal objects from those fungal materials, the method comprising the steps of growing a first fungal tissue in contact with a nutritive vehicle; supplying a porous material in contact with said first fungal tissue; directing growth of said fungal tissue through said porous material such that a portion of said fungal tissue comprises a first fungal material having first fungal hyphae; optionally incorporating composite material; directing a change in the composition or growth pattern of at least some of said first fungal hyphae; separating at least a portion of the first fungal material from said nutritive vehicle; obtaining a second fungal material having second fungal hyphae; and forming a fungal object by encouraging fused growth between said first fungal material and said second fungal material and optionally incorporating composite material.

WO 2021/180948 relates to a method of manufacturing a prefab construction element, preferably a load-bearing element, for frame construction, such as wood frame construction, comprising the steps of providing a roofing, flooring or wall panel, which panel comprises an enclosure, providing a fungus and a substrate, introducing or preparing a mixture of the fungus and the substrate, in the enclosure and allowing the fungus to grow to form a network of hyphae through the mixture and into the walls of the enclosure to form a mycelium composite, and drying the composite while it remains in the enclosure of the panel.

The invention will now be explained with reference to the figures, in which an example of the invention is shown.
Figure 1 is a perspective view of a mold contained an open reinforcement material and a hardened matrix material in accordance with the present invention.
Figure 2 is a perspective view of the mold of Figure 1 provided with a vegetation layer.
Figure 3 a perspective view of an element for a green, pitched roof in accordance with the present invention.
Figure 4 is an isometric view of a house where elements, such as those shown in Figure 3, are placed on its roof.
Figure 5 is an isometric view of the house in Figure 4 with the green roof installed.
Figures 6 and 7 are perspective views of a mold for making an element for a green roof.
Figures 8 and 9 are perspective views of an element for assembling a green, flat roof.
Figure 10 is a perspective view of a building with a green, flat roof in accordance with the present invention.

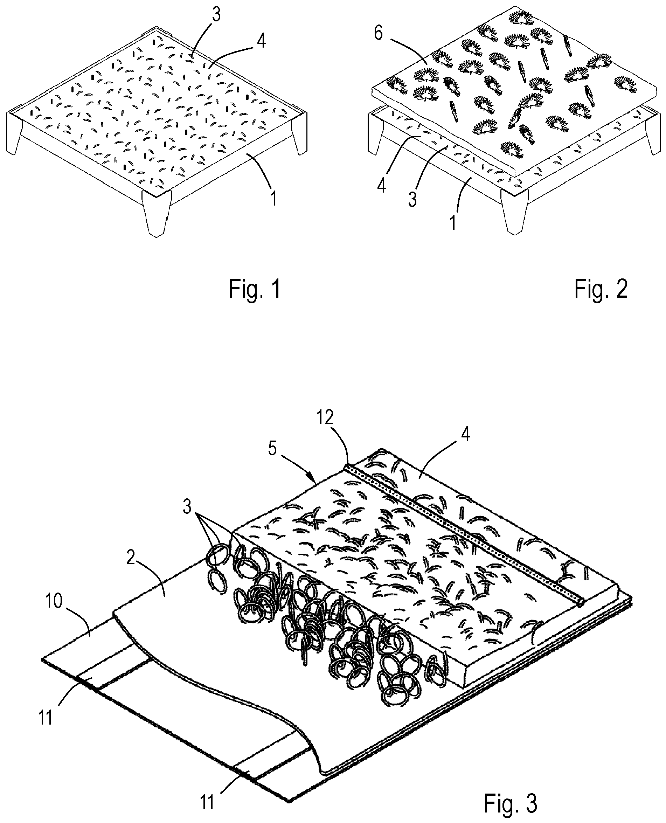

Figure 1 shows a mold 1, with a nonwoven backing layer 2 (see Figure 3), an open reinforcement structure 3, and a matrix, i.c. a mixture for a mycelium composite 4, were introduced into the mold. More specifically, after providing the mold 1, a backing layer 2, such as a relatively thick nonwoven, e.g. from a polypropylene needle felt, was placed on the bottom, in this example a perforated bottom plate, of the mold 1, followed by an open reinforcement structure 3, such as Enkamat^{®}, having a height of e.g. 4 centimeters placed on the backing layer, and pouring a flowable mixture 4 of a fungus (inoculum), such as Pleurotus ostreatus, substrate, such as hemp, foliage, and sawdust, at least one nutrient, such as oatflakes, water, and a substrate for water retention, such as perlite, onto and into the reinforcement structure 3.

After the mixture was introduced into the mold and the voids of the reinforcement structure, the mold was covered, e.g. with an impermeable foil, and the temperature of the mixture was maintained in a range from 15 to 24°C, for example 20°C. The fungus was allowed to grow, e.g. for a period in a range from 50 to 120 hours, preferably in a range from 70 to 110 hours, for example 100 hours, to harden the mixture, i.e. grow a network of hyphae through the mixture, the backing layer, and the reinforcement structure to form a mycelium composite embedding the reinforcement structure and the substrate for water retention. When the mycelium composite was considered at or near optimum, in terms of strength, stiffness and durability in a dried state, the fungus was killed by heating and drying the mycelium composite, resulting in a green roof element 5.

Optionally, as shown in Figure 2, a vegetation layer 6 is attached to the mycelium composite 4.

Figure 3 shows a small section of a green roof comprising a roof construction, e.g. rafters, a ridge beam, and boards covering the sides of the roof and providing a roof surface, covered (and thus hidden from view) by a waterproof and root-proof layer 10, such as a layer of bitumen or rubber, e.g. ethylene propylene diene monomer (EPDM) rubber, TPO (thermoplastic polyolefin), or PVC (polyvinyl chloride). The layer comprises strips, e.g. parallel strips, or patches of double-sided adhesive tape or, preferably, strips 11, e.g. three parallel strips, or patches of hooks for hook-and-pile fastening. Thus, the backing 2 of the green roof element can be touch fastened to the sheets of waterproof material. Put differently, the strips of hooks and the nonwoven backing together provide hook-and-pile (Velcro) fastening.

Figure 3 further illustrates how means for irrigation have been integrated in the green roof element, in this example as a drip hose 12.

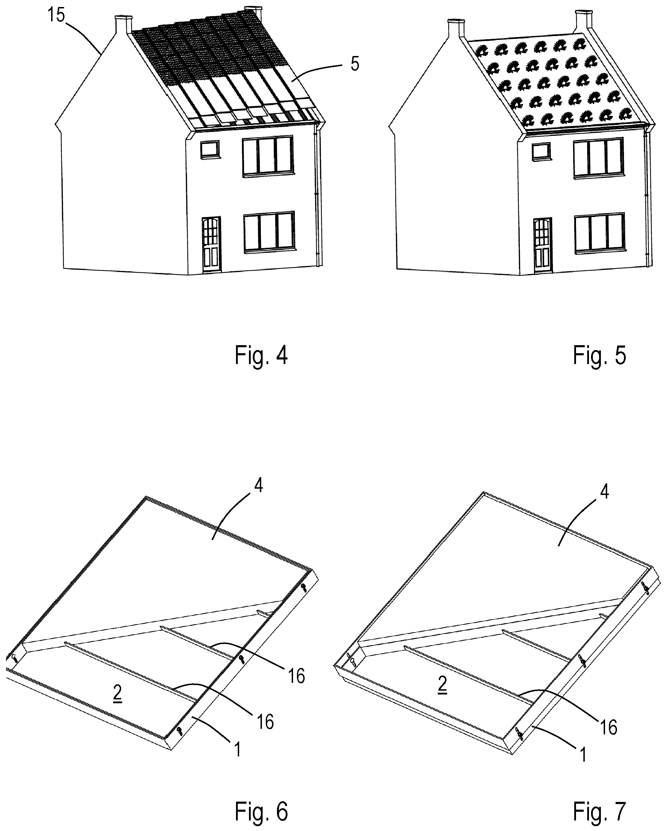

Figures 4 and 5 show an existing pitched roof 15, where tiles are replaced with green roof elements according to the present invention, such as those shown in more detail in Figure 3. The green roof elements of the present invention are equally suitable for a newly constructed pitched roof.

Figures 6 and 7 show a mold 1 for making a green roof element as well as the inclusion of baffles 16 to accumulate water. The one or more baffles are placed on the backing layer 2 and between sections, in this example rectangular sections, of the reinforcement structure.

In the example shown in Figure 6, the mold is 6 centimeters high, whereas the baffles are 2,5 cm high. Thus, once installed in a pitched green roof, with baffles of adjoining elements aligned, the baffles will retain water locally. This is particularly relevant in the higher regions of a pitched green roof, that tend to dry out faster than lower regions.

Figure 7 illustrates that the height of the mold 1 is adjustable. In Figure 7, the height of the mold is increased to accommodate a thicker reinforcement structure and/or a thicker matrix 4. The resulting element is more suitably for intensively planted green roofs, often called garden roofs which, similar to an ordinary garden, may be planted with various kinds of plants: bushes, trees, and/or lawns.

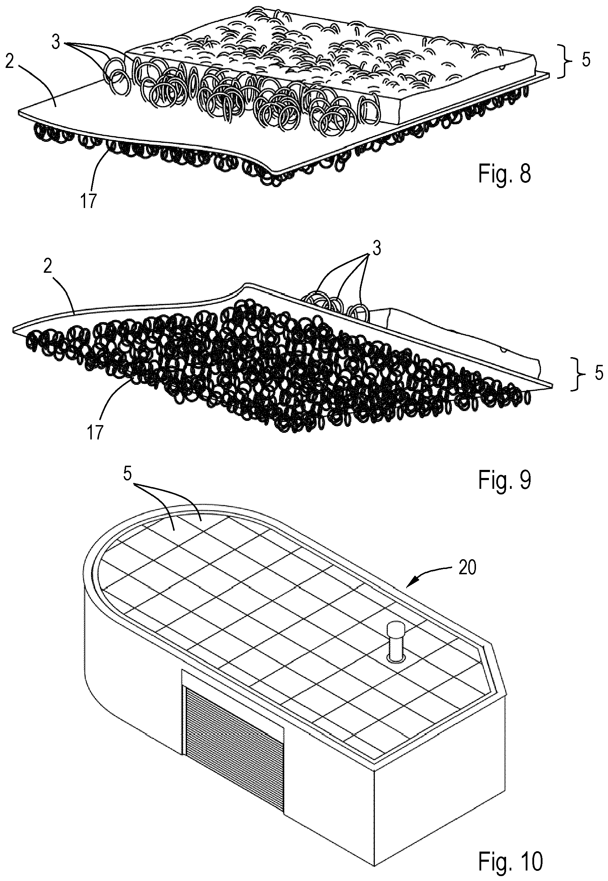

Figures 8 and 9 show an element for assembling a green, flat roof. This element it provided, at the bottomside of the backing layer, with a drainage layer 17. In the embodiment shown, the drainage layer is made from the same material, Enkamat^{®}, as the open reinforcement structure, only with a different, in this example smaller, thickness.

Figure 10 shows a building 20 with a flat green roof, where the plate-like green roof elements 5 have been tailormade to the specific roof, with the required features, such as tailormade openings and edges, already prefabricated defined in the elements.

The invention is not limited to the described embodiments and can be varied within the framework of the claims. For instance, the elements of the present invention are also very suitable for supporting vegetation, such as sedum, on embankments.

## Claims

1. Method of making an element (5) for a green roof, such as a pitched roof (15) or a flat roof, or a green wall
comprising the steps of
providing an open reinforcement structure (3) comprising voids,
providing a flowable matrix material (4) containing a substrate for water retention,
introducing or preparing the matrix material (4) containing the substrate in the voids of the reinforcement (3) structure,
allowing the matrix material (4) to harden to form a solid matrix (4) embedding the substrate and the reinforcement structure (3).

2. Method according to claim 1, comprising
providing a fungus and a nutrient,
introducing or preparing a mixture (4) of the fungus, the nutrient and the substrate for water retention below the reinforcement structure (3) and/or in the voids of the reinforcement structure (3),
allowing the fungus to grow to form a network of hyphae through the mixture and the reinforcement structure (3) to form a mycelium composite (4) embedding the reinforcement structure (3) and the substrate for water retention, and
drying the composite (4).

3. Method according to claim 1 or 2, comprising the steps of providing a mold (1),
introducing the open reinforcement structure (3) comprising voids into the mold (1),
introducing or preparing the flowable matrix material (4) containing the substrate for water retention in the mold (1) and in the voids of the reinforcement structure (3), and
allowing the matrix (4) to harden.

4. Element (5), in particular a plate, for assembling a green roof (15) or wall, which element (5) is preferably made with the method according to any one the preceding claims and comprises an open reinforcement structure (3) comprising voids, which structure is embedded in a matrix material (4) containing a substrate for water retention.

5. Method or element according to any one of the preceding claims, wherein the open reinforcement structure (3) comprises a web of entangled fibers and/or filaments.

6. Method or element according to claim 5, wherein the fibers and/or filaments are bonded together, e.g. mechanically, thermally and/or chemically, and/or are made from a synthetic material, in particular a thermoplastic polymer.

7. Method or element according to any one of the preceding claims, wherein the open reinforcement structure (3) is at least 80% open, preferably at least 90% open.

8. Method or element according to any one of the preceding claims, wherein the reinforcement structure (3) has a height of at least 1 centimeter, preferably in a range from 1,5 to 10 cm, preferably in a range from 2 to 7 cm.

9. Method or element according to any one of the preceding claims, wherein a layer (6) comprising vegetation and/or wherein seeds for vegetation are attached to or embedded in at least of the topside of the element (5).

10. Method or element according to any one of the preceding claims, wherein the hardened matrix material (4) is penetrable for the roots of vegetation attached to or embedded in the element (5).

11. Method or element according to any one of the preceding claims, compirising a textile, e.g. nonwoven, backing layer (2) that is attached to the bottomside of the open reinforcement structure (3) and/or the matrix (4).

12. Method or element according to any one of the preceding claims, wherein further functional components, such as baffles (16) for locally retaining water, are embedded in the element.

13. Green roof (15), such as a pitched roof or a flat roof, or a green wall, comprising a roof or wall surface, a water resistant layer (10) covering the roof or wall surface, and a plurality of elements (5) according to any one of the claims 4-12 covering at least part of the water resistant layer (10).

14. Green roof (15) or wall according to claim 13, wherein the elements (5) are attached to the water-resistant layer (10), preferably by means of hook-and-pile fasteners (11, 2).

15. Green roof (15) or wall according to claim 14, wherein the piles are attached to or part of the bottom side (2) of the elements (5).
